# EUROPEAN PATENT SPECIFICATION

(11) **EP 0 364 047 B1**
(45) Date of publication and mention of the grant of the patent: **28.06.1995**
(21) Application number: 89202558.6
(22) Date of filing: 10.10.1989
(51) Int. Cl.: H04N 5/91

(54) **Method for preventing unauthorized recording on tapes of video programmes**
Verfahren zur Verhinderung von nichterlaubter Aufzeichnung von Videoprogrammen auf Band
Méthode pour empêcher l'enregistrement non autorisé sur bandes de programmes vidéo

(30) Priority: 11.10.1988 NL 8802494
(43) Date of publication of application: 18.04.1990
(73) Proprietor: COPYGUARD ENTERPRISES S.A., Luxembourg (LU)
(72) Inventor: Wijnen, Arie Marinus, NL-2811 RC Reeuwijk (NL)
(74) Representative: Mommaerts, Johan Hendrik, Dipl.-Phys.

(56) References cited:
- WO-A-86/05057
- GB-A- 2 086 641
- US-A- 4 673 981

## Description

When transmitting film programmes over television channels, it is to be avoided, in view of copyrights and requirements set in this respect by the owners of the films, that, at the reception side, these films will be recorded on tape. To that end the video signals to be transmitted should be modified in such a manner that the operation of such recording apparatus will be disturbed so as to make the recorded pictures unsuitable for further use. This also holds for authorised recorded programmes on tape, which tapes are to be sold or hired.

The invention provides for this purpose a method defined in claim 1. US-A-4 673 981 discloses a method as set out in the preamble of claim 1.

The frame frequency change needs not be more than about 5 % and will provide, then, such a disturbance of the operation of a recording apparatus that the recorded pictures are unusable. This change of the frame repetition frequency lead to a corresponding lengthening or shortening of the total programme duration which is, however, not substantial. Of course the capacity of the memory used for this purpose should be adapted thereto.

Preferably the change of the frame repetition frequency will be changed around a mean value, in particular a deviation of about zero. The advantage thereof is that, on the one hand the capacity of the memory can be smaller accordingly, and on the other hand, a substantial deviation of the sound in respect of the picture can be avoided without requiring adaptation means for the sound channel.

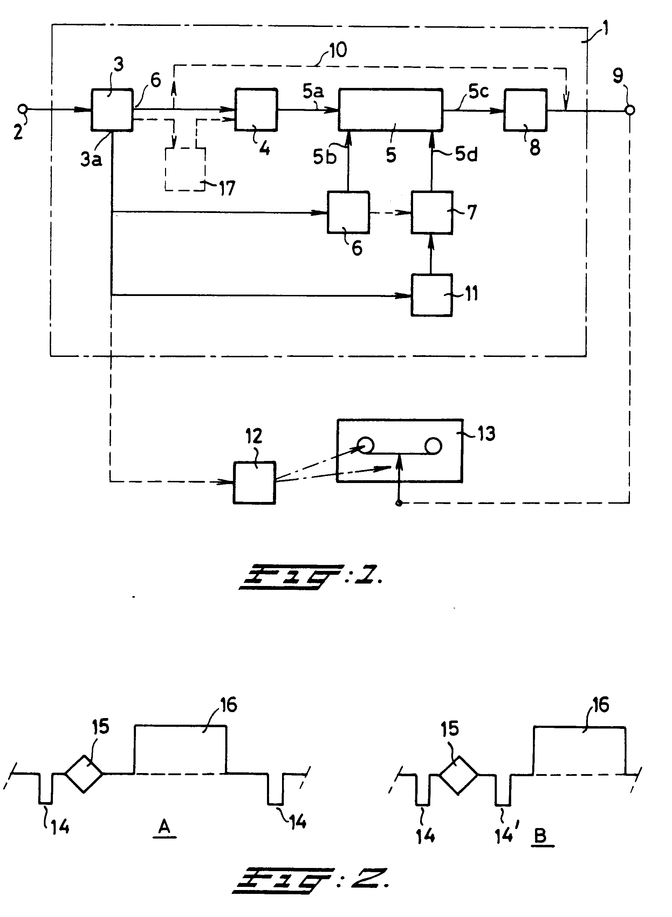

By using a time-base corrector, which, in principle, operates in the same manner as the apparatus shown in figure 1, it remains possible to correct the frequency deviation. Such correctors are, as such, expensive, but nevertheless will be economically feasible if the profits of such tape recordings are sufficiently high. In order to prevent this, the method according to the invention will be preferably performed in the manner mentioned in claim 3. In the case of an authorised recording on tape of such video signals the synchronisation of the recording apparatus can be correctly controlled in the manner mentioned in claim 4. The object of the invention is to make the use of a time base corrector which would cancel the frame frequency change ineffective.

The invention will be elucidated in more detail by reference to a drawing, showing in:
Fig. 1 a simplified block diagram of an apparatus for carrying out the method of the invention; and
Figs. 2A en B highly simplified representations of the portion of a composite video signal related to a picture line.

In Fig. 1 a symplified block diagram of the apparatus for carrying out the method of the invention is shown within a frame 1. The structure of the various blocks thereof need not to be described in more detail, since, after having described the operation thereof, this will be clear to an expert.

The apparatus 1 comprises an input terminal 2 to which the video signal to be processed are to be supplied, which terminal is connected with the input of a first stage 3 by means of which the frame and line synchronisation signals present in the supplied video signals can be derived, which signals are transferred towards a first input 5a of a digital shift memory 5. With a second input 5b the output of an input control stage 5 is connected, which stage provides that the digital signals will be introduced at the correct repetition frequency, i.e. the frame repetition frequency of the video signals, into the memory 5. This control stage 6 can be connected with the output 3a of the stage 3 for being tuned to the frame repetition frequency. In this manner the digitalised video signals will be introduced into the memory 5 at the correct repetition frequency.

The memory 5 has an output 5c for extracting the signals stored in the memory 5. Moreover a control input 5d is present at this end which is connected with an output control stage 7 corresponding with the stage 6 but tuned to a different repetition frequency, this in such a manner that outputting the signals stored in the shift memory 5 will take place at the frequency of the stage 7.

The frequency of the stage 7 differs a little from the frequency of the stage 6, e.g. by not more than 5 %. This means that the total duration of the video signal series extracted via the output 5c differs from the duration of the signals supplied to the input 5a. If the output frequency is lower than the input frequency, outputting will last longer than inputting, so that the memory 5 should have a capacity corresponding to this difference. For a programme of for instance lh a difference of 5 % will mean a time difference of 3 min, so that the memory could be able to take up signals arriving during 3 min. In the case of a faster outputting the memory must initially accumulate the difference.

The video signals appearing at the output 5c are being restored to the analog form again by a digital/analog convertor 8, and, are, supplied to an output terminal 9 which, for instance, is connected with a transmission channel such as a television cable or the like.
If a tape recording apparatus were to be connected with this channel, the tape velocity will be adapted by the synchronisation circuits thereof to the frame repetition frequency of the incoming composite video signals, whereas the recording head which provides for recording along an oblique line on the tape is to be controlled in such a manner that a picture line will correspond with a recording line. Since the picture line length will not change, the line inclination will change. This means that, when reproducing the pictures recorded in this manner on the tape with the head control being adapted to a different inclination, a disturbance of the picture will take place, in such a manner such recorded tapes will be unusable. When directly reproducing these signals by means of a normal television apparatus no disturbance will take place.

Although this disturbance will be absolutely effective for counteracting unauthorized recording on tape of video signals, this method has still some draw-backs. For longer programmes the difference in the duration thereof can become so large that the capacity of the memory should be substantial, which is, sometimes, objectionable. A more important objection is that the sound channel is separately processed as indicated diagrammatically at 10, and then no change of duration will take place, so that in the case of longer programmes a disturbance of the synchronisation between picture and sound will take place. Changing the duration of the sound signal in the same manner is not impossible but, nevertheless, objectionable.

In order to avoid these objections, the output control stage 7 can be connected with an auxiliary stage 11 providing for a periodical variation of the frequency deviation between the stages 6 and 7 around a central value, in particular the value zero. This stage 11 can be connected to that end with the output 3a.

In this manner the total duration of the signal series appearing at the output terminal 9 will be substantially equal to that of the series supplied to the input 2, so that not only no appreciable disturbance of the picture sound synchronisation will occur, but, moreover, a considarably smaller memory can be used, since the latter has only to take up a temporary compression or of the signal.

When this disturbance is to be provided in authorised programmes recorded on tape, the head and tape drive of the recording apparatus would, without additional measures, be disturbed in the same manner as in the case of an unauthorized recording. Therefore, as shown in Fig. 1, the head and tape control 12 of the used tape recording apparatus 13 will be controlled by signals derived from the output 3a, and the internal control then being switched off.

It is possible to cancel the above-mentioned repetition frequency changes by means of a time-base corrector which also comprises a digital memory and anolog/digital and digital/anolog convertors. Such adaptors are, as such, very expensive, but can be economically justified if the profits of the unauthorised recordings are large.

In order to make the use of a time-base corrector impossible, a further disturbance of the video signals can be provided. Fig. 2A shows a simplified representation of the portion of a composite video signal corresponding to a picture line. This signal consists of a negative line synchronisation pulse 14 followed by a colour burst 15, which is followed by the positive picture element signals 16 which, for the sake of simplicity, are shown as a block. In order to disturb the time-base corrector, the line synchronisation pulse will, as shown in Fig. 2B at 14′, be repeated after the colour burst 15. For a reproducing apparatus this has no consequences, but this is the case indeed for a time-base corrector which considers the second line synchronisation pulse 14′ as a new line synchronisation pulse. This also holds for tape recording apparatus, so that the operation thereof will be additionally disturbed.

This additional disturbance can be obtained in an auxiliary stage indicated in Fig. 1 at 17 by interrupted lines. A tape recording apparatus 13 for authorized use with a separate synchronisation control 12 will, then, not be disturbed.

A further disturbance can be obtained by varying the position and/or width of the repeated line synchronisation pulse 14′. In that case the automatic gain detector or automatic gain control of a recording apparatus will be disturbed, which will lead to a further disturbation of the picture.

## Claims

1. A method for preventing unauthorised recording of video programmes on tape, comprising changing the video signals in such a manner that the operation of a tape recording apparatus for recording thereof will be disturbed, the frame repetition frequency of the signals to be transmitted being changed in such a manner, that, on the one hand, the operation of a television apparatus used for reproducing said signals will not be disturbed, but, on the other hand, the co-operation between the driving means for the tape and recording head displacement in the tape recording apparatus will be disturbed,
the method being characterised in that,
in the video signals, the line synchronisation signal preceeding each colour synchronisation burst will be repeated after the latter, so as to disturb the synchronisation of a time-base corrector used for cancelling the frequency change.

2. The method of claim 1, **characterised** in that, the change of the frame repetition frequency is continuously changed around a mean frequency deviation, and in particular a deviation of about zero.

3. The method of claim 2, **characterised** in that, the position and/or the width of the repeated line synchronisation signal is varied.

4. The method of any one of claims 1 to 3, intended for being used for authorized recording of video signals on tape, **characterised** in that, before the change of the repetition frequency, the synchronisation signals are separated and are being led separately towards the recording apparatus in order to synchronise the latter when recording the video signals with the changed repetition frequency.

## Patentansprüche

1. Verfahren zum Verhindern des nichtberechtigten Aufzeichnens von Videoprogrammen auf Band, wobei die Videosignale derart geändert werden, daß der Betrieb eines Bandaufzeichnungsgerätes bei deren Aufzeichnung gestört wird und die Wiederholfrequenz für die Übertragungsblöcke der zu übertragenden Signale derart geändert wird, daß einerseits der Betrieb eines Fernsehgerätes zur Wiedergabe der besagten Signale nicht gestört wird, jedoch andererseits die Wechselwirkung zwischen dem Antriebsmittel für das Band und der Verschiebung des Aufnahmekopfes im Bandaufzeichnungsgerät gestört wird, dadurch gekennzeichnet, daß in den Videosignalen das Zeilensynchronisationssignal, das jedem Farbsynchronisationsbündel vorausgeht, nach dem letzteren wiederholt wird, um so die Synchronisation eines für die Aufhebung der Frequenzänderung benutzten Zeitbasiskorrektors zu stören.

2. Verfahren nach Anspruch 1, dadurch gekennzeichnet, daß die Änderung der Wiederholfrequenz für die Übertragungsblöcke kontinuierlich um eine mittlere Frequenzabweichung erfolgt, insbesondere eine Abweichung von etwa Null.

3. Verfahren nach Anspruch 2, dadurch gekennzeichnet, daß die Position und/oder Breite des wiederholten Zeilensynchronisationssignals variiert wird.

4. Verfahren nach einem der Ansprüche 1 bis 3, vorgesehen für die Benutzung bei der berechtigten Aufzeichnung von Videosignalen auf Band, dadurch gekennzeichnet, daß vor der Änderung der Wiederholfrequenz die Synchronisationgssignale separiert werden und separat zum Aufzeichnungsgerät geführt werden, um letzteres beim Aufzeichnen der Videosignale mit der geänderten Wiederholfrequenz zu synchronisieren.

## Revendications

1. Procédé pour empêcher l'enregistrement non autorisé de programmes vidéo sur bande, comprenant la modification des signaux vidéo de telle manière que le fonctionnement d'un magnétoscope destiné à leur enregistrement soit perturbé, la fréquence de répétition d'image des signaux à transmettre étant modifiée de telle manière que, d'une part, le fonctionnement d'un appareil de télévision utilisé pour reproduire lesdits signaux ne sera pas perturbé, mais que d'autre part, la coopération entre les moyens d'entraînement pour la bande et le déplacement de la tête d'enregistrement dans le magnétoscope sera perturbée, procédé caractérisé en ce que, dans les signaux vidéo, le signal de synchronisation de ligne précédant chaque salve de synchronisation de couleurs sera répété après cette dernière, de manière à perturber la synchronisation d'un correcteur à base temps pour annuler la modification de fréquence.

2. Procédé selon la revendication 1, caractérisé en ce que la modification de la fréquence de répétition d'image est changée de manière continue autour d'une déviation de fréquence moyenne, et en particulier d'une déviation d'environ zéro.

3. Procédé selon la revendication 2, caractérisé en ce que la position et/ou la largeur du signal de synchronisation de ligne répété est modifiée.

4. Procédé selon l'une quelconque des revendications 1 à 3, destiné à être utilisé pour l'enregistrement autorisé de signaux vidéo sur bande, caractérisé en ce que, avant la modification de la fréquence de répétition, les signaux de synchronisation sont séparés et sont conduits séparément vers le magnétoscope afin de synchroniser ce dernier lors de l'enregistrement des signaux vidéo avec la fréquence de répétition modifiée.
